# EUROPEAN PATENT APPLICATION

(11) **EP 4 733 181 A1**
(43) Date of publication of application: **29.04.2026**
(21) Application number: 23954235.0
(22) Date of filing: 27.09.2023
(51) Int. Cl.: B62J 6/24, B62J 17/04, B62J 50/22

(54) **SADDLE-RIDING TYPE VEHICLE AND PROJECTION DEVICE**

(71) Applicant: HONDA MOTOR CO., LTD., Tokyo 105-8404 (JP)
(72) Inventor: YOKOYAMA, Yuichi, Wako-shi, Saitama 351-0193 (JP); ONO, Kazuki, Wako-shi, Saitama 351-0193 (JP); TAKEHARA, Yoshiyasu, Wako-shi, Saitama 351-0193 (JP); TAJI , Kentaro, Wako-shi, Saitama 351-0193 (JP)
(74) Representative: Kiwit, Benedikt
(86) International application number: PCT/JP2023/035183
(87) International publication number: WO 2025/069259

(57) **Abstract**

A straddle type vehicle characterized by including a handlebar, and a meter unit provided at a center in front of the handlebar, wherein a light emitter is provided on a lateral side of the straddle type vehicle, and a reflector is provided in front of the handlebar, and reflects light of the light emitter toward a lateral side of the meter unit, is provided.

## Description

### TECHNICAL FIELD

The present invention relates to a straddle type vehicle and a projection device.

### BACKGROUND ART

In straddle type vehicles represented by motorcycles, a technique related to a so-called head-up display that provides various types of information about a straddle type vehicle while superimposing the information on a field of vision (a forward view) of a rider (a driver) is proposed (see Patent Literature 1). Patent Literature 1 discloses a technique of using a windshield provided in a front part of the straddle type vehicle as a screen and projecting (displaying) a video indicating traffic information on the windshield in order to provide the rider with the traffic information about traffic of the straddle type vehicle.

### CITATION LIST

### PATENT LITERATURE

PTL 1: Japanese Patent Laid-Open No. 2001-278153

### SUMMARY OF INVENTION

### TECHNICAL PROBLEM

In the above related art, information is projected only onto the front surface. However, in such a case, information can be projected only in a limited space of the screen. In a straddle type vehicle, the projection space is limited as compared with that of a four-wheeled automobile. Hence, there is a demand for a technique of providing (displaying) the rider with various types of information about the straddle type vehicle while ensuring (prioritizing) the field of vision on the front surface of the rider in a limited space.

The present invention provides a technique, in a straddle type vehicle, advantageous for notifying a situation in the surroundings of the straddle type vehicle.

### SOLUTION TO PROBLEM

A straddle type vehicle as one aspect of the present invention is that a straddle type vehicle characterized by including a handlebar, and a meter unit provided at a center in front of the handlebar, wherein a light emitter is provided on a lateral side of the straddle type vehicle, and a reflector is provided in front of the handlebar, and reflects light of the light emitter toward a lateral side of the meter unit.

A projection device as another aspect of the present invention is that a projection device provided on a straddle type vehicle including a handlebar and a meter unit provided at a center in front of the handlebar, the projection device characterized in that a light emitter is provided on a lateral side of the straddle type vehicle, and a reflector is provided in front of the handlebar, and reflects light of the light emitter toward a lateral side of the meter unit.

### ADVANTAGEOUS EFFECTS OF INVENTION

The present invention can provide, for example, a technique, in a straddle type vehicle, advantageous for notifying a situation in the surroundings of the straddle type vehicle.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a view illustrating a configuration of a straddle type vehicle according to one aspect of the present invention.
FIG. 2 is a view illustrating a configuration of the straddle type vehicle according to one aspect of the present invention.
FIG. 3 is a view illustrating a front part of the straddle type vehicle from the viewpoint of a rider.
FIG. 4 is a view illustrating a windshield from the viewpoint of the rider.
FIG. 5 is a view illustrating the windshield from the viewpoint of the rider.

### DESCRIPTION OF EMBODIMENTS

Hereinafter, embodiments will be described in detail with reference to the accompanying drawings. Note that the following embodiments are not intended to limit the scope of the claimed invention, and not all combinations of features described in the embodiments are essential to the invention. Two or more of the plurality of features described in the embodiments may be optionally combined. In addition, identical or similar configurations are denoted by identical reference numerals, and overlapping descriptions will be omitted.

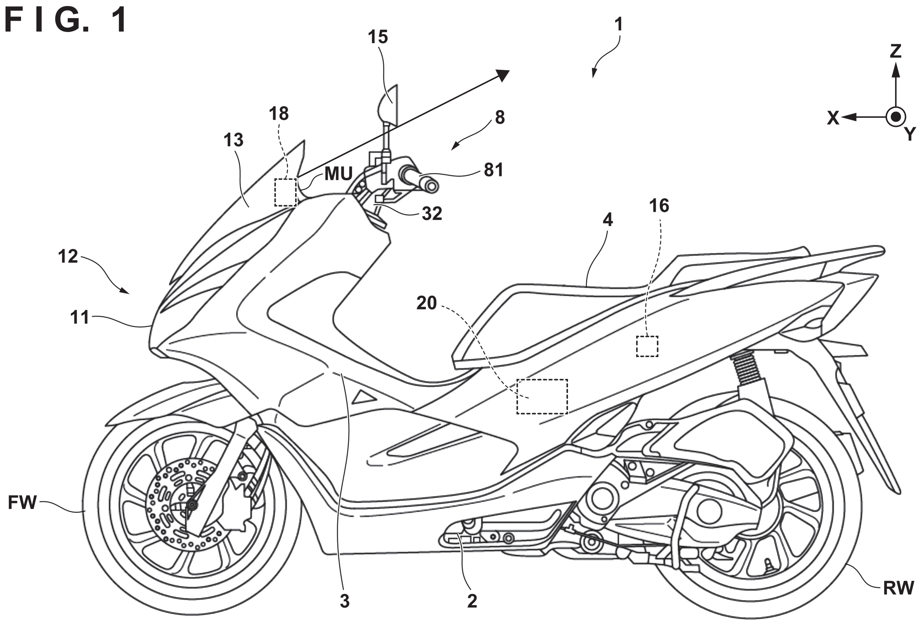

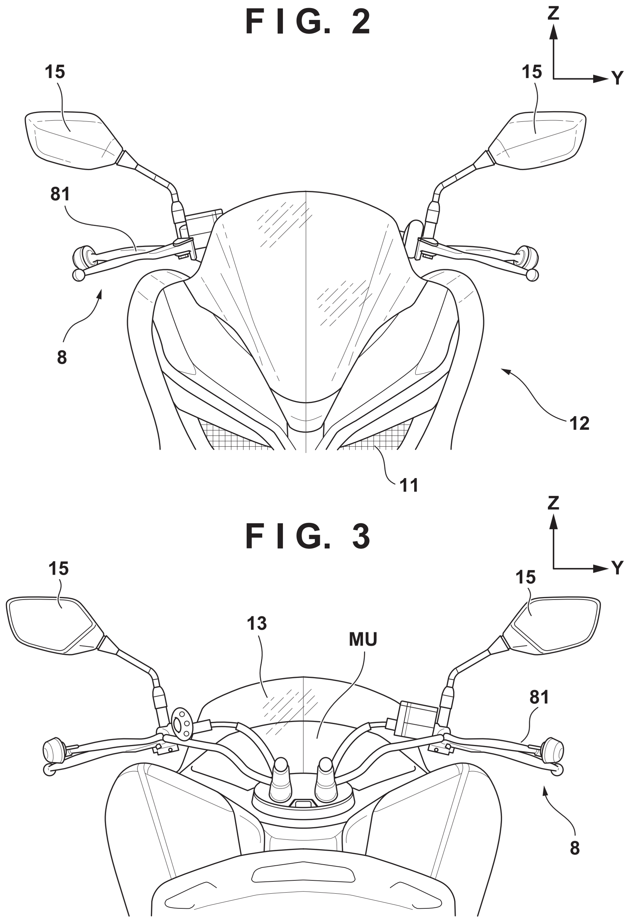

FIGS. 1 and 2 are each a view illustrating a configuration of a straddle type vehicle 1 according to one aspect of the present invention. FIG. 1 is a side view of the straddle type vehicle 1, and FIG. 2 is a front view of the straddle type vehicle 1. Arrows X, Y, and Z indicate directions orthogonal to one another, X direction indicates a front-and-rear direction of the straddle type vehicle 1, Y direction indicates a vehicle width direction (a left-and-right direction) of the straddle type vehicle 1, and Z direction indicates an up-and-down direction (a height direction) of the straddle type vehicle 1. The left and right of the straddle type vehicle 1 correspond to the left and right when viewed in a traveling direction (an advancing direction) of the straddle type vehicle 1. In addition, the front or the rear of the straddle type vehicle 1 in the front-and-rear direction will be simply referred to as the front or the rear, and inside or outside of the straddle type vehicle 1 in the vehicle width direction will be simply referred to as the inside or the outside, in some cases.

The straddle type vehicle 1 is a vehicle on which a rider (driver) rides and drives. In the present embodiment, the straddle type vehicle 1 is embodied as a motorcycle including a front wheel FW and a rear wheel RW. However, the present invention is applicable to various straddle type vehicles including motorcycles.

The straddle type vehicle 1 includes a power unit 2 between the front wheel FW and the rear wheel RW. The power unit 2 includes, for example, a drive source of an internal combustion engine including an engine and a transmission that changes the output of the engine. However, the power unit 2 may use a motor as the drive source. The output (driving force) of the power unit 2 is transmitted to the rear wheel RW.

The power unit 2 is supported by a vehicle body frame 3, which defines a vehicle body (frame). The vehicle body frame 3 includes a pair of left and right main frames extending in a front-and-rear direction. A head pipe 32, which rotatably supports a steering shaft rotated by a handlebar 8, and a front suspension mechanism that supports the front wheel FW, are provided on a front end portion of the main frame. A pair of left and right seat rails extending rearward are respectively provided at rear end portions of the main frames. The seat rail supports a seat 4, on which the rider sits (rides).

The steering shaft rotatably supported by a fork support is coupled to a steering shaft supported by the head pipe 32 via a link. The steering shaft is rotated by steering (operation) of the handlebar 8, and the front wheel FW is steered. In this manner, the handlebar 8 functions as a member for steering the straddle type vehicle 1. In addition, a grip portion 81 (a grip) to be gripped by the rider in order to operate the handlebar 8 is provided on the handlebar 8.

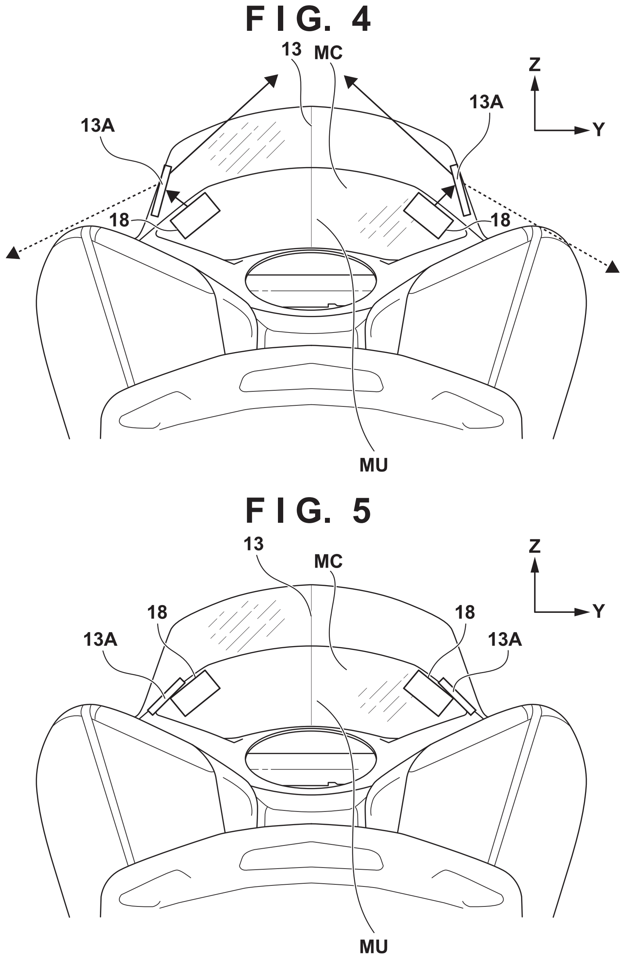

A meter unit MU is provided at the center in front of the handlebar 8 (the straddle type vehicle 1). The meter unit MU has a function of displaying various types of vehicle information about the straddle type vehicle 1 for the rider. The meter unit MU includes, for example, a liquid crystal display panel capable of displaying a tachometer (engine speed), a speedometer (traveling speed), an indicator, a fuel meter, a clock, and the like, as the vehicle information. The meter unit MU is covered with a meter cover MC from the front (vehicle front) of the straddle type vehicle 1 (see FIG. 4).

A headlight unit 11, which emits light ahead of the straddle type vehicle 1, is provided in a front part of the straddle type vehicle 1. As the headlight unit 11, for example, a left-right symmetric binocular headlight unit, a left-right asymmetric binocular headlight unit, or a monocular or trinocular headlight unit is used.

The front part of the straddle type vehicle 1 is covered with a front cowl 12, and lateral side portions of the front part of the straddle type vehicle 1 are respectively covered with a pair of left and right side cowls. A windshield 13 is provided above the front cowl 12 and in front of the handlebar 8. The windshield 13 functions as a windshield that reduces wind pressure applied to the rider during traveling. The windshield 13 is made of a light-transmissive material, and is made of, for example, a transparent or translucent resin member.

Side mirror units 15 are respectively provided on lateral sides of the windshield 13. In the present embodiment, the side mirror unit 15 is attached to the handlebar 8 (handlebar), and reflects the situation behind the straddle type vehicle 1 to support the rider in visually recognizing the rear.

A sensor unit 16 is provided in each part of the front, the rear, and a lateral side of the straddle type vehicle 1. The sensor unit 16 includes a camera, a light detection and ranging (LIDAR), a millimeter wave radar, or the like, and functions as a detection device that detects a situation in the surroundings of the straddle type vehicle 1. The sensor unit 16 detects (a line that defines) a vehicle lane, a target object, and the like present in the surroundings of the straddle type vehicle 1, as a situation in the surroundings of the straddle type vehicle 1. The vehicle lane includes, for example, a travel lane of the self-vehicle, an adjacent lane adjacent to the travel lane, and an opposite lane of the travel lane. In addition, the target object includes, for example, moving bodies (a preceding vehicle, an approaching vehicle, a following vehicle, pedestrians, and the like) present ahead of, behind, and on lateral sides of the straddle type vehicle 1, and obstacles present in the surroundings of the straddle type vehicle 1.

A light emitter 18 is provided on a front lateral side of the straddle type vehicle 1. In the present embodiment, the light emitter 18 is provided on a lateral side of the straddle type vehicle 1, specifically, between the windshield 13 and the meter cover MC, without being limited to this.

The light emitter 18 includes, for example, a plurality of light emitting elements (light emitting diodes (LED) and the like) and a lens. In the present embodiment, the light emitter 18 projects light from the plurality of light emitting elements onto the windshield 13 via the lens, and thus a video corresponding to ON (light emission)/OFF (non-light emission) of each light emitting element is displayed. In other words, the light emitter 18 functions as a projector (a projection device) using the windshield 13, which is provided in the front part of the straddle type vehicle 1, as a screen. In addition, the light emitter 18 works in cooperation with the windshield 13 to achieve a head-up display that provides various types of information about the straddle type vehicle 1 while superimposing the information on the field of vision (a forward view) of the rider. Note that an incident (a reflection) angle of the light projected from the light emitter 18 onto the windshield 13 is preferably an obtuse angle.

The straddle type vehicle 1 includes a controller 20, which controls the respective units (the entirety) of the straddle type vehicle 1. The controller 20 includes a control unit (ECU) including a processor represented by a CPU, a storage device such as a semiconductor memory, an input and output interface with an external device, a communication interface, and the like. In the storage device, programs to be executed by the processor, data to be used by the processor for processing, and the like are stored. The controller 20 may include a plurality of sets of processors, storage devices, interfaces, and the like corresponding to the respective functions of the straddle type vehicle 1.

In the straddle type vehicle 1, the driving load of the rider is generally large. For example, a rider who is wearing a helmet has a narrow field of view for the surroundings of the straddle type vehicle 1. Although the side mirror units 15 are provided, the visibility behind the straddle type vehicle 1 tends to be particularly lowered. Hence, in the straddle type vehicle 1, there is a demand for a technique for causing the rider to recognize, for example, information about the situation in the surroundings of the straddle type vehicle 1 (for example, moving bodies present in the surroundings of the straddle type vehicle 1, particularly a moving body present behind the straddle type vehicle 1) while ensuring the field of view ahead of the rider.

Therefore, in the present embodiment, as a driving assistance technique for reducing the driving load of the rider, a head-up display is provided for displaying (notifying) information about the situation in the surroundings of the straddle type vehicle 1 while superimposing the information on the field of vision (the forward view) ahead of the rider. Such a head-up display is achieved by the windshield 13 and the light emitter 18 as described above under the control of the controller 20.

Hereinafter, the head-up display achieved in the present embodiment will be described. FIG. 3 is a view illustrating the front part of the straddle type vehicle 1 from the viewpoint of the rider. Referring to FIG. 3, the handlebar 8 is present in the field of vision ahead of the rider, and the windshield 13 is present in front of the handlebar 8. Therefore, by projecting light from the light emitter 18 toward the windshield 13, which is provided in front of the handlebar 8, to cause the windshield 13 to function as a reflector that reflects the light from the light emitter 18 toward a lateral side of the meter unit MU, it becomes possible to provide the rider with the information about the situation in the surroundings of the straddle type vehicle 1. Note that in FIG. 1, a trajectory of the light reflected by the windshield 13 (the reflector) is indicated by an arrow.

Here, for example, it is conceivable that the windshield 13 displays an image corresponding to the situation in the surroundings of the straddle type vehicle 1. However, in this case, the image displayed on the windshield 13 excessively attracts the rider's attention, and rider's forward visual recognition tends to be neglected, which may fail to reduce the driving load. Therefore, in the present embodiment, instead of displaying an image on the windshield 13, the situation in the surroundings of the straddle type vehicle 1 is provided for the rider by causing a part of the windshield to emit light.

Specifically, as illustrated in FIG. 4, in the present embodiment, light is projected from the light emitter 18 onto the windshield 13, and a reflector 13A, which is a part of the windshield 13, is caused to emit the light. The reflector 13A denotes a region (a light emitting region) that reflects the light projected from the light emitter 18, and includes an end edge portion of the windshield 13 in the vehicle width direction (Y direction) of the straddle type vehicle 1 as illustrated in FIG. 4. In this manner, in the present embodiment, a region (for example, the central region) that obstructs the field of vision ahead of the rider is avoided, and the end edge portion of the windshield 13 is set as the reflector 13A of the windshield 13. This ensures the field of vision ahead of the rider, and it becomes possible to notify the information about the situation in the surroundings of the straddle type vehicle 1 without disturbing the rider in concentrating ahead. In addition, a third party is able to confirm the light projected from the light emitter 18 onto the windshield 13 (the reflector), so that the visibility of the straddle type vehicle 1 can be improved. In FIG. 4, light that is reflected by the reflector 13A of the windshield 13 and travels toward the rider is indicated by a solid line, and light that is reflected by the reflector 13A of the windshield 13 and travels toward the third party is indicated by a broken line. Note that in the present embodiment, a pair of left and right end portions (two end portions located in the left-and-right direction) of the windshield 13 serve as the reflectors 13A. However, only one of the left end edge portion and the right end edge portion of the windshield 13 may serve as the reflector 13A. FIG. 4 is a view illustrating the windshield 13, which is provided in the front part of the straddle type vehicle 1 from the viewpoint of the rider. Note that in FIG. 4, illustration of the handlebar 8 and the like is omitted in order to illustrate the entirety of the windshield 13.

In addition, as illustrated in FIG. 4, the reflector 13A of the windshield 13 is preferably located above the meter unit MU, which is provided at the center in front of the handlebar 8, in the up-and-down direction (Z direction) of the straddle type vehicle 1. In other words, it is sufficient if the reflector 13A of the windshield 13 does not overlap the meter unit MU. This facilitates the identification of the reflector (a light emitting region) of the windshield 13 and (the vehicle information displayed on) the meter unit MU, and thus the visibility of the reflector of the windshield 13 is improved. This is useful at night when the field of view of the rider becomes narrower.

Similarly, from the viewpoint of visibility of the light emitting region of the windshield 13, the reflector 13A of the windshield 13 is located on an outer side in the vehicle width direction of the straddle type vehicle 1 than the meter unit MU, which is provided at the center in front of the handlebar 8, as illustrated in FIG. 4. This facilitates identification of the reflector of the windshield 13 and (the vehicle information displayed on) the meter unit MU, and thus the visibility of the light emitting region of the windshield 13 is improved.

In addition, as illustrated in FIG. 5, the reflector 13A of the windshield 13 may be set at a rear end of the windshield 13 in the front-and-rear direction of straddle type vehicle 1, as long as it is not the region that obstructs the field of vision ahead of the rider. By setting the reflector at the rear end of the windshield 13, it becomes possible to ensure the field of vision ahead of the rider and to notify the information about the situation in the surroundings of the straddle type vehicle 1 without disturbing the rider in concentrating ahead. Note that in FIG. 5, a pair of left and right rear ends (two rear ends located in the left-and-right direction) of the windshield 13 serve as the reflectors 13A. However, only one rear end of the left rear end and the right rear end of the windshield 13 may be set as the reflector 13A. FIG. 5 is a view illustrating the windshield 13, which is provided in the front part of the straddle type vehicle 1, from the viewpoint of the rider. Note that in FIG. 5, illustration of the handlebar 8 and the like is omitted in order to illustrate the entirety of the windshield 13.

Examples of the information about the situation in the surroundings of the straddle type vehicle 1 to be notified to the rider via the reflector 13A of the windshield 13 include moving bodies present in the surroundings of the straddle type vehicle 1, particularly, a following vehicle which is a moving body present behind the straddle type vehicle 1. As described above, it is possible for the sensor unit 16, which is provided in each unit of the straddle type vehicle 1, to detect the moving objects present in the surroundings of the straddle type vehicle 1 including the following vehicle. In this manner, it is possible to cause the sensor unit 16 to function as a unit for detecting the following vehicle present behind the straddle type vehicle 1. Hence, in the present embodiment, when the sensor unit 16 detects the following vehicle, the controller 20 controls the light emitter 18 to project light onto the windshield 13 to cause the reflector 13A to emit light. By controlling the light emitter 18 in this manner, based on a detection result of the sensor unit 16, it becomes possible to notify that a following vehicle is present (approaching) behind the straddle type vehicle 1 while ensuring the field of vision ahead of the rider without disturbing the rider in concentrating ahead.

In addition, in the present embodiment, as described above, a pair of left and right end edge portions (two end edge portions located in the left-and-right direction) of the windshield 13 are respectively set as the reflectors 13A. Therefore, by independently controlling the light emission at the pair of left and right end edge portions of the windshield 13, it becomes possible to notify the rider of the following vehicle present behind the straddle type vehicle 1 in more detail. For example, in the controller 20, when the sensor unit 16 detects a following vehicle present on the right behind the straddle type vehicle 1, the light emitter 18 is controlled to cause the right end edge portion of the two end edge portions, which are the reflectors 13A of the windshield 13, to emit light. On the other hand, when the sensor unit 16 detects a following vehicle present on the left behind the straddle type vehicle 1, the light emitter 18 is controlled to cause the left end edge portion of the two end edge portions, which are the reflectors 13A of the windshield 13, to emit light. In this manner, by causing one end edge portion, on which the following vehicle is present, of the two end edge portions, which are the reflectors 13A of the windshield 13, to emit light, it becomes possible to notify on which either left or right the following vehicle is present (from which either left or right the following vehicle is approaching).

Note that as to the period while the reflector 13A of the windshield 13 is emitting light, various patterns are conceivable. For example, the light emitter 18 may project light onto the windshield 13 so that the reflector 13A of the windshield 13 is continuously emitting light for a predetermined period of time. In addition, the light emitter 18 may project light onto the windshield 13 so that the reflector 13A of the windshield 13 intermittently emits light (blinks) for a predetermined period of time. This enables the rider to easily recognize that the reflector 13A of the windshield 13 is emitting light, so that the possibility of overlooking the light can be reduced. Note that instead of causing the reflector 13A of the windshield 13 to emit light for a predetermined period of time, the reflector 13A of the windshield 13 may be caused to emit light while the sensor unit 16 is detecting a moving object present in the surroundings of the straddle type vehicle 1 including a following vehicle.

### <Summary of Embodiment>

1. The straddle type vehicle of the above embodiment
   is a straddle type vehicle (for example, 1) characterized by including:
   a handlebar (for example, 8); and
   a meter unit (for example, MU) provided at a center in front of the handlebar, wherein
   a light emitter (for example, 18) is provided on a lateral side of the straddle type vehicle, and
   a reflector (for example, 13A) is provided in front of the handlebar, and reflects light of the light emitter toward a lateral side of the meter unit.

According to this embodiment, it becomes possible to ensure the field of vision ahead of the rider and notify the information about the situation in the surroundings of the straddle type vehicle without disturbing the rider in concentrating ahead. In addition, the third party is able to confirm the light projected from the light emitter onto the reflector, so that the visibility of the straddle type vehicle can be improved.

2. The above straddle type vehicle characterized by further including:
a windshield (for example, 13) provided in front of the handlebar (for example, 8); and
a meter cover that covers the meter unit (for example, MU) from vehicle front, wherein
the reflector (for example, 13A) is provided on the windshield, and
the light emitter (for example, 18) is provided between the windshield and the meter cover.

According to this embodiment, it becomes possible to use the windshield as the light emitter.

3. The above straddle type vehicle characterized in that
the reflector (for example, 13A) is an end edge portion of the windshield in an up-and-down direction of the straddle type vehicle (for example, 1).

According to this embodiment, identification of the reflector and (the vehicle information displayed on) the meter unit is facilitated, and thus the visibility of the reflector is improved.

4. The above straddle type vehicle characterized in that
the reflector (for example, 13A) is an end edge portion of the windshield (for example, 13) in a vehicle width direction of the straddle type vehicle (for example, 1).

According to this embodiment, identification of the reflector and (the vehicle information displayed on) the meter unit is facilitated, and thus the visibility of the reflector is improved.

5. The above straddle type vehicle characterized by further including:
a sensor unit (for example, 16) that detects a moving body present behind the straddle type vehicle (for example, 1); and
a controller (for example, 20) that controls the light emitter, based on a detection result of the sensor unit, wherein
when the sensor unit detects the moving body, the controller controls the light emitter (for example, 18) to project light onto the windshield (for example, 13) and cause the reflector (for example, 13A) to emit the light.

According to this embodiment, it becomes possible to notify that a following vehicle is present (approaching) behind the straddle type vehicle while ensuring a field of vision ahead of the rider without disturbing the rider in concentrating ahead.

6. The above straddle type vehicle characterized in that
the controller (for example, 20)
controls the light emitter (for example, 18) to cause a reflector on right in the reflector (for example, 13) in a vehicle width direction of the straddle type vehicle (for example, 1), when the sensor unit (for example, 16) detects the moving body present on the right behind the straddle type vehicle, and
controls the light emitter to cause a reflector on left in the reflector in the vehicle width direction of the straddle type vehicle, when the sensor unit detects the moving body present on the left behind the straddle type vehicle.

According to the present embodiment, it becomes possible to notify on which either left or right the following vehicle is present (from which either left or right the following vehicle is approaching).

7. The above straddle type vehicle characterized in that
the light emitter (for example, 18) projects the light onto the reflector so that the reflector (for example, 13A) continuously emits the light for a predetermined period of time.

According to this embodiment, it becomes possible for the rider to easily recognize that the reflector is emitting light, so that the possibility of overlooking can be reduced.

8. The above straddle type vehicle characterized in that
the light emitter (for example, 18) projects the light onto the reflector so that the reflector (for example, 13A) intermittently emits the light for a predetermined period of time.

According to this embodiment, it becomes possible for the rider to easily recognize that the reflector is emitting light, so that the possibility of overlooking can be reduced.

9. The above straddle type vehicle characterized in that
the reflector (for example, 13A) is provided at a rear end of the windshield (for example, 13) in a front-and-rear direction of the straddle type vehicle (for example, 1).

According to this embodiment, it becomes possible to ensure the field of vision ahead of the rider and notify the information about the situation in the surroundings of the straddle type vehicle without disturbing the rider in concentrating ahead.

10. The above straddle type vehicle characterized in that
the windshield (for example, 13) is made of a light-transmissive material.

According to this embodiment, it becomes possible to cause the windshield to serve as a screen.

11. The projection device of the above embodiment
is a projection device provided on a straddle type vehicle (for example, 1) including a handlebar (for example, 8) and a meter unit (for example, MU) provided at a center in front of the handlebar, the projection device characterized in that
a light emitter (for example, 18) is provided on a lateral side of the straddle type vehicle, and
a reflector (for example, 13A) is provided in front of the handlebar, and reflects light of the light emitter toward a lateral side of the meter unit.

According to this embodiment, it becomes possible to ensure the field of vision ahead of the rider and notify the information about the situation in the surroundings of the straddle type vehicle without disturbing the rider in concentrating ahead. In addition, the third party is able to confirm the light projected from the light emitter onto the reflector, so that the visibility of the straddle type vehicle can be improved.

The present invention is not limited to the above embodiments, and various changes and modifications can be made without departing from the spirit and scope of the present invention. Therefore, in order to make the scope of the present invention public, the following claims are attached.

### REFERENCE SIGNS LIST

- 1: Straddle type vehicle
- 8: Handlebar
- 13: Windshield
- 13A: Reflector
- 18: Light emitter
- 20: Controller

## Claims

1. A straddle type vehicle **characterized by** comprising:
a handlebar; and
a meter unit provided at a center in front of the handlebar, wherein
a light emitter is provided on a lateral side of the straddle type vehicle, and
a reflector is provided in front of the handlebar, and reflects light of the light emitter toward a lateral side of the meter unit.

2. The straddle type vehicle according to claim 1, **characterized by** further comprising:
a windshield provided in front of the handlebar; and
a meter cover that covers the meter unit from vehicle front, wherein
the reflector is provided on the windshield, and
the light emitter is provided between the windshield and the meter cover.

3. The straddle type vehicle according to claim 2, **characterized in that** the reflector is an end edge portion of the windshield in an up-and-down direction of the straddle type vehicle.

4. The straddle type vehicle according to claim 2, **characterized in that**
the reflector is an end edge portion of the windshield in a vehicle width direction of the straddle type vehicle.

5. The straddle type vehicle according to any one of claims 2 to 4, **characterized by** further comprising:
a sensor unit that detects a moving body present behind the straddle type vehicle; and
a controller that controls the light emitter, based on a detection result of the sensor unit, wherein
when the sensor unit detects the moving body, the controller controls the light emitter to project light onto the windshield and cause the reflector to emit the light.

6. The straddle type vehicle according to claim 5, **characterized in that**
the controller
controls the light emitter to cause a reflector on right in the reflector in a vehicle width direction of the straddle type vehicle, when the sensor unit detects the moving body present on the right behind the straddle type vehicle, and
controls the light emitter to cause a reflector on left in the reflector in the vehicle width direction of the straddle type vehicle, when the sensor unit detects the moving body present on the left behind the straddle type vehicle.

7. The straddle type vehicle according to any one of claims 1 to 6, **characterized in that** the light emitter projects the light onto the reflector so that the reflector continuously emits the light for a predetermined period of time.

8. The straddle type vehicle according to any one of claims 1 to 6, **characterized in that** the light emitter projects the light onto the reflector so that the reflector intermittently emits the light for a predetermined period of time.

9. The straddle type vehicle according to claim 2, **characterized in that** the reflector is provided at a rear end of the windshield in a front-and-rear direction of the straddle type vehicle.

10. The straddle type vehicle according to claim 2, **characterized in that** the windshield is made of a light-transmissive material.

11. A projection device provided on a straddle type vehicle including a handlebar and a meter unit provided at a center in front of the handlebar, the projection device **characterized in that**
a light emitter is provided on a lateral side of the straddle type vehicle, and
a reflector is provided in front of the handlebar, and reflects light of the light emitter toward a lateral side of the meter unit.

## Amended claims

### Amended claims under Art. 19.1 PCT

1. A straddle type vehicle **characterized by** comprising:
a handlebar; and
a meter unit provided at a center in front of the handlebar, wherein
a light emitter is provided on a lateral side of the straddle type vehicle, and
a reflector is provided in front of the handlebar, and reflects light of the light emitter toward a lateral side of the meter unit,
further comprising
a windshield provided in front of the handlebar;
a meter cover that covers the meter unit from vehicle front;
a sensor unit that detects a moving body present behind the straddle type vehicle; and
a controller that controls the light emitter, based on a detection result of the sensor unit, wherein
the reflector is provided on the windshield,
the light emitter is provided between the windshield and the meter cover,
when the sensor unit detects the moving body, the controller controls the light emitter to project light onto the windshield and cause the reflector to emit the light,
controls the light emitter to cause a reflector on right in the reflector in a vehicle width direction of the straddle type vehicle, when the sensor unit detects the moving body present on the right behind the straddle type vehicle, and
controls the light emitter to cause a reflector on left in the reflector in the vehicle width direction of the straddle type vehicle, when the sensor unit detects the moving body present on the left behind the straddle type vehicle.

3. The straddle type vehicle according to claim 1, **characterized in that** the reflector is located on an upper side end edge portion of the windshield in an up-and-down direction of the straddle type vehicle.

4. The straddle type vehicle according to claim 1, **characterized in that**
the reflector is an end edge portion of the windshield in a vehicle width direction of the straddle type vehicle.

7. The straddle type vehicle according to any one of claims 1 to 4, **characterized in that** the light emitter projects the light onto the reflector so that the reflector continuously emits the light for a predetermined period of time.

8. The straddle type vehicle according to any one of claims 1 to 4, **characterized in that** the light emitter projects the light onto the reflector so that the reflector intermittently emits the light for a predetermined period of time.

9. The straddle type vehicle according to claim 1, **characterized in that** the reflector is provided at a rear end of the windshield in a front-and-rear direction of the straddle type vehicle.

10. The straddle type vehicle according to claim 1, **characterized in that** the windshield is made of a light-transmissive material.

11. A projection device provided on a straddle type vehicle including a handlebar and a meter unit provided at a center in front of the handlebar, the projection device **characterized in that**
a light emitter is provided on a lateral side of the straddle type vehicle, and
a reflector is provided in front of the handlebar, and reflects light of the light emitter toward a lateral side of the meter unit,
further including
a windshield provided in front of the handlebar;
a meter cover that covers the meter unit from vehicle front;
a sensor unit that detects a moving body present behind the straddle type vehicle; and
a controller that controls the light emitter, based on a detection result of the sensor unit, wherein
the reflector is provided on the windshield,
the light emitter is provided between the windshield and the meter cover,
when the sensor unit detects the moving body, the controller controls the light emitter to project light onto the windshield and cause the reflector to emit the light,
controls the light emitter to cause a reflector on right in the reflector in a vehicle width direction of the straddle type vehicle, when the sensor unit detects the moving body present on the right behind the straddle type vehicle, and
controls the light emitter to cause a reflector on left in the reflector in the vehicle width direction of the straddle type vehicle, when the sensor unit detects the moving body present on the left behind the straddle type vehicle.
